# EUROPÄISCHE PATENTSCHRIFT

(11) **EP 0 990 319 B1**
(45) Veröffentlichungstag und Bekanntmachung des Hinweises auf die Patenterteilung: **14.11.2001**
(21) Anmeldenummer: 98936196.9
(22) Anmeldetag: 17.06.1998
(51) Int. Cl.: H04B 7/26

(54) **VERFAHREN ZUR ZEITSYNCHRONISATION FÜR EINE MOBILSTATION IN EINEM FUNK-KOMMUNIKATIONSSYSTEM**
TIME SYNCHRONISATION METHOD FOR A MOBILE STATION IN A MOBILE COMMUNICATIONS SYSTEM
PROCEDE DE SYNCHRONISATION TEMPORELLE POUR UNE STATION MOBILE DANS UN SYSTEME DE RADIOCOMMUNICATION

(30) Priorität: 17.06.1997 DE 19725580
(43) Veröffentlichungstag der Anmeldung: 05.04.2000
(73) Patentinhaber: SIEMENS AKTIENGESELLSCHAFT, 80333 München (DE)
(72) Erfinder: RITTER, Gerhard, D-86943 Thaining (DE); KLEIN, Anja, D-80999 München (DE); FÄRBER, Michael, D-82515 Wolfratshausen (DE)
(86) Internationale Anmeldenummer: DE9801652
(87) Internationale Veröffentlichungsnummer: WO9858463

(56) Entgegenhaltungen:
- EP-A- 0 551 803
- EP-A- 0 767 557

## Beschreibung

Verfahren, Mobilstation und Basisstation zur Zeitsynchronisation für eine Mobilstation in einem Funk-Kommunikationssystem

Die Erfindung betrifft ein Verfahren zur Zeitsynchronisation für eine Mobilstation eines Funk-Kommunikationssystems, sowie eine derartig ausgestaltete Mobilstation und eine Basisstation.

Der Aufbau von digitalen Funk-Kommunikationssystemen ist in J.Oudelaar, "Evolution towards UMTS", PIMRC 94, 5th IEEE International Symp. on Personal, Indoor and Mobile Radio Communications, The Hague, NL, 18.-22. September 1994, S.852-856, und M.Lenti, H.Hageman, "Paging in UMTS", RACE Mobile Telecommunications Workshop, Vol. 1, Amsterdam, NL, 17.-19. Mai 1994, S.405-410, gezeigt.

Das gegenwärtig existierende Mobilfunksystem GSM (Global System for Mobile Communications) ist ein Funk-Kommunikationssystem mit einer TDMA-Komponente zur Teilnehmerseparierung (time division multiple access). Gemäß einer Rahmenstruktur werden Nutzinformationen der Teilnehmerverbindungen in Zeitschlitzen übertragen. Die Übertragung erfolgt blockweise. Aus dem GSM-Mobilfunksystem sind in Abwärtsrichtung weiterhin dem Zeitraster der Rahmenstruktur angepaßte Frequenzkanäle (SCH synchronization channel) zur Zeitsynchronisation für die Mobilstationen bekannt. In diesem Frequenzkanal kann eine Mobilstation zur Selbstsynchronisation übertragene Daten auswerten. Eine derartige Selbstsynchronisation ist aus EP 0 551 803 A1 bekannt.

Aus EP 0 767 557 A1 ist ein Verfahren zur Zeitsynchronisation für eine Mobilstation bekannt. Die Verbindungen werden in einem reinen TDMA System durch Zeitschlitze und Frequenzbänder getrennt. Die Basisstation sendet starr in regelmäßiqen Intervallen einen Frequenzkanal zur Zeitsynchronisation (SCH). Dieser Frequenzkanal zur Zeitsynchronisation ist immer an derselben Stelle eines Mehrfachrahmens angeordnet, z.B. jeweils im ersten Zeitschlitz jedes zehnten TDMA Rahmens. Der Mobilstation ist eine im Frequenzkanal zur Zeitsynchronisation enthaltene 64-bit Trainingssequenz und der Ort ihrer Anordnung innerhalb der TDMA Rahmen und Zeitschlitze bekannt.

Aus DE 195 49 148.3 ist ein Mobil-Kommunikationssystem bekannt, das eine TDMA/CDMA-Teilnehmerseparierung (CDMA code division multiple access) nutzt und empfangsseitig ein JD-Verfahren (joint detection) anwendet, um unter Kenntnis von Spreizkodes mehrerer Teilnehmer eine verbesserte Detektion der übertragenen Nutzinformationen vorzunehmen. In einem Fre quenzkanal (TCH traffic channel) werden gleichzeitig Informationen mehrerer Nutzdatenverbindungen übertragen, die durch ihren Spreizkode unterscheidbar sind. Durch die Einteilung von bestimmten Frequenzkanälen für Synchronisationszwecke entsteht jedoch ein großer Kapazitätsverlust gegenüber dem GSM-System, da der für einen Frequenzkanal genutzte Frequenzbereich breitbandiger ist.

Der Erfindung liegt die Aufgabe zugrunde, ein Verfahren und Vorrichtungen bereitzustellen, die in einem TDMA Funk-Kommunikationssystem die Zeitsynchronisation bei geringem Verbrauch funktechnischer Ressourcen ermöglichen. Diese Aufgabe wird durch das Verfahren mit den Merkmalen des Patentanspruchs 1, die Mobilstation mit den Merkmalen des Patentanspruchs 10 und die Basisstation mit den Merkmalen des Patentanspruchs 11 gelöst. Weiterbildungen der Erfindung sind den Unteransprüchen zu entnehmen.

Ein Funk-Kommunikationssystem, beispielsweise ein TDMA/CDMA Funk-Kommunikationssystem, stellt durch Zeitschlitze und durch breitbandige Frequenzbereiche gebildete Frequenzkanäle bereit, in denen gleichzeitig Informationen einer oder mehrerer Verbindungen zwischen Mobilstationen und Basisstationen übertragen werden, wobei die Informationen unterschiedlicher Verbindungen gemäß einer verbindungsindividuellen Feinstruktur unterscheidbar sind. Es können jedoch auch einer Verbindung mehrere, unterschiedliche Feinstrukturen zugeteilt werden, die empfangsseitig wieder zusammengefaßt werden.

Erfindungsgemäß werden für die Mobilstationen in Abwärtsrichtung zeitlich wiederkehrend Frequenzkanäle zum Zeitab-gleich bereitgestellt, in denen eine bekannte Signalform zusätzlich zu Informationen weiterer Verbindungen übertragen wird. Die bekannte Signalform wird durch eine erste Basis-station gesendet, währenddessen die weiteren Verbindungen durch andere Basisstationen versorgt werden. Alternativ dazu kann auch eine einzelne Basisstation die bekannte Signalform zur Synchronisation und Informationen der weiteren Verbindungen in einem Frequenzkanal senden. Die zu synchronisierende Mobilstation ermittelt aus empfangenen Signalen zumindest einen Zeitpunkt des Eintreffens der Signalform, der anschließend von der Mobilstation zur Zeitsynchronisation benutzt wird.

Indem die Signalform zusätzlich zu Informationen weiterer Verbindungen übertragen wird, können die funktechnischen Ressourcen der Funkschnittstelle zwischen Basisstation und Mobilstationen besser genutzt werden. Durch die Unterscheidbarkeit von Informationen entsprechend einer aufgeprägten Feinstruktur wird ein Zeitschlitz nicht allein durch die Synchronisation blockiert, sondern kann vielfältig genutzt werden. Die weiteren Verbindungen können dabei Nutzdaten- oder Signalisierungsverbindungen sein. In einem Gleichwellennetz, d.h. benachbarte Basisstationen nutzen den gleichen Frequenzbereich, werden die weiteren Verbindungen beispielsweise durch die Nachbar-Basisstation angeboten.

Gemäß einer Ausgestaltung der Erfindung ist die Signalform als eine Trainingssequenz eines Funkblocks mit zu übertragenden Daten ausgebildet. Somit können Funkblöcke, die Informationen für verschiedene Zwecke übertragen, durch die Ausgestaltung einer speziellen Trainingssequenz zur Zeitsynchronisation genutzt werden. Damit wird die Kapazität der Funkschnittstelle weiter erhöht. Die Trainingssequenz kann weiterhin zur Kanalschätzung benutzt werden.

Die Signalform wird vorteilhafterweise mit einem individuellen Spreizkode gespreizt, wobei im Spreizkode die Information über das Vorliegen einer Signalform zur Zeitsynchronisation enthalten sein kann. Die Signalform kann auch als eine Folge von Chips aufgefaßt werden, die eine den Frequenzbereich ausfüllende Bandbreite erzeugen. Indem der Funkblock mit den Angaben zur Zeitsynchronisation gemeinsam mit den übrigen Funkblöcken durch Entspreizung verarbeitbar ist, entfällt ein zusätzlicher Verarbeitungsaufwand beim Empfänger.

Der zumindest eine Zeitpunkt wird nach einer Ausprägung der Erfindung durch Bestimmung der Korrelation eines Empfangssignals mit einer im Empfänger bekannten Vergleichsfolge ermittelt. Eine dabei ermittelte Korrelationsspitze gibt beispielsweise die zeitliche Mitte eines Zeitschlitzes an und kann somit zur weiteren Orientierung bezüglich der Rahmenstuktur der Funkschnittstelle dienen. Alternativ kann der zumindest eine Zeitpunkt durch eine signalangepaßte Filterung eines Empfangssignals ermittelt werden.

Zum Erhöhen der Genauigkeit der Zeitsynchronisation wird vorteilhafterweise mehrmals der Zeitpunkt des Eintreffens der Signalform bestimmt und zur Frequenzsynchronisation eine Mittelung der Zeitpunkte durchgeführt. Die Mittelung reduziert den Einfluß einmaliger Fehler.

Für eine Rahmensynchronisation der Mobilstation enthält die Signalform, die beispielsweise als digitale Symbolfolge ausgeprägt ist, in bestimmten Zeitschlitzen Angaben über eine Rahmenstruktur der Frequenzkanäle. Die Signalform kann folglich auch zur Übertragung dieser Informationen ohne weitere Kapazitätseinbußen genutzt werden. Vorteilhafterweise unterscheidet sich die Symbolfolge zu bestimmten Zeitpunkten von Hyper- und/oder Superrahmen von der Symbolfolge in den übrigen Zeitschlitzen des Frequenzkanals zur Zeitsynchronisation. Zur Rahmenkennzeichnung können jedoch alternativ auch zusätzliche Symbole zu bestimmten Zeitpunkten, z.B. zu Beginn von Hyper- und/oder Superrahmen, die Symbolfolge ergänzen.

Im folgenden wird die Erfindung anhand eines Ausführungsbeispiels bezugnehmend auf zeichnerische Darstellungen näher erläutert.

Dabei zeigen
- FIG 1: ein Blockschaltbild eines Mobilfunknetzes,
- FIG 2: eine schematische Darstellung der Rahmenstruktur der Funkübertragung,
- FIG 3: eine schematische Darstellung der Struktur eines Frequenzkanal zur Zeitsynchronisation, und
- FIG 4: Blockschaltbilder von Mobilstation und Basisstation und der Funkübertragung in Abwärtsrichtung.

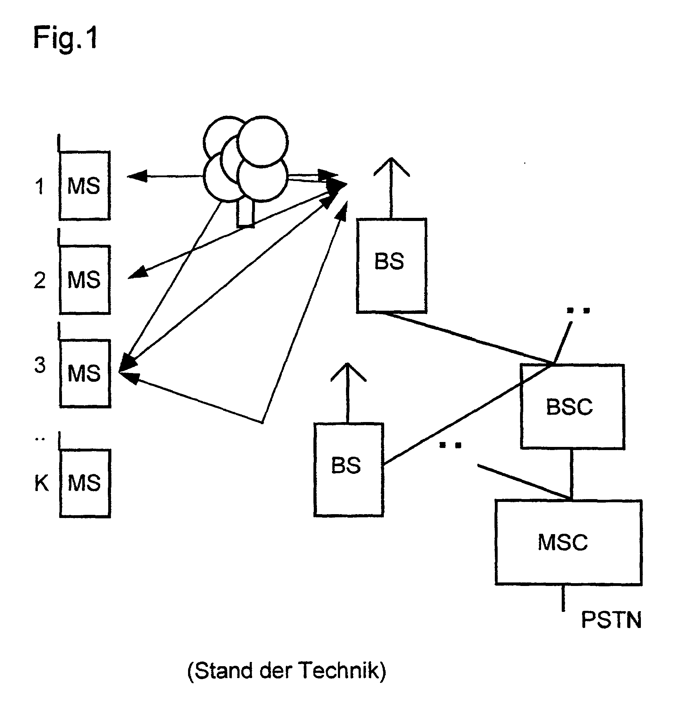

Das in FIG 1 dargestellte Funk-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einem Basis-stationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Nachrichtenverbindung zu Mobilstationen MS aufbauen kann.

In FIG 1 sind beispielhaft drei Verbindungen zur Übertragung von Nutzinformationen und Signalisierungsinformationen zwischen drei Mobilstationen MS und einer Basisstation BS dargestellt. Ein Operations- und Wartungszentrum OMC realisiert Kontroll- und Wartungsfunktionen für das Mobilfunknetz bzw. für Teile davon. Die Funktionalität dieser Struktur ist auf andere Funk-Kommunikationssysteme übertragbar, in denen die Erfindung zum Einsatz kommen kann.

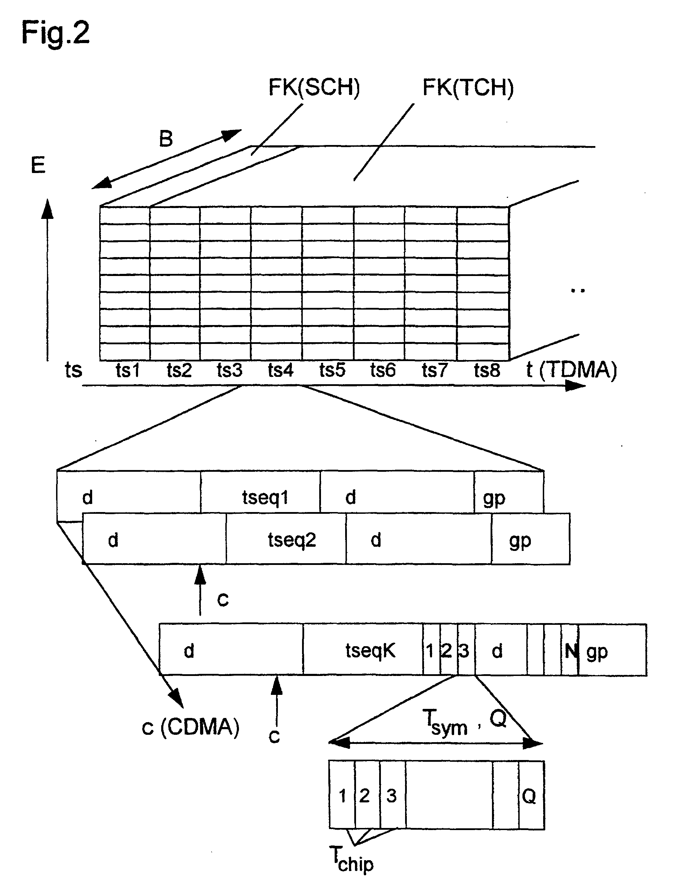

Die Rahmenstruktur der Funkübertragung ist aus FIG 2 ersichtlich. Gemäß einer TDMA-Komponente ist eine Aufteilung eines breitbandigen Frequenzbereiches, beispielsweise der Bandbreite B = 1,6 MHz oder B = 5 MHz in mehrere Zeitschlitze ts, beispielsweise 8 Zeitschlitze ts1 bis ts8 oder (nicht dargestellt) 16 Zeitschlitze vorgesehen. Jeder Zeitschlitz ts innerhalb des Frequenzbereiches B bildet einen Frequenzkanal FK. Innerhalb der Frequenzkanäle TCH, die allein zur Nutzdatenübertragung vorgesehen sind, werden Informationen mehrerer Verbindungen in Funkblöcken übertragen.

Diese Funkblöcke zur Nutzdatenübertragung bestehen aus Abschnitten mit Daten d, in denen Abschnitte mit empfangsseitig bekannten Trainingssequenzen tseql bis tseqK eingebettet sind. Die Daten d sind verbindungsindividuell mit einer Feinstruktur, einem Teilnehmerkode c, gespreizt, so daß empfangsseitig beispielsweise K Verbindungen durch diese CDMA-Komponente separierbar sind.

Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Teilnehmerkode c. Weiterhin ist innerhalb des Zeitschlitzes ts eine Schutzzeit gp zur Kompensation unterschiedlicher Signalaufzeiten der Verbindungen vorgesehen.

Innerhalb eines breitbandigen Frequenzbereiches B werden die aufeinanderfolgenden Zeitschlitze ts nach einer Rahmenstruktur gegliedert. So werden acht Zeitschlitze ts zu einem Rahmen zusammengefaßt, wobei beispielsweise ein Zeitschlitz ts4 des Rahmens einen Frequenzkanal TCH zur Nutzdatenübertragung bildet und wiederkehrend von einer Gruppe von Verbindungen genutzt wird. Ein Frequenzkanal SCH zur Zeitsynchronisation der Mobilstationen MS wird nicht in jedem Rahmen, jedoch zu einem vorgegebenen Zeitpunkt innerhalb eines Multirahmens eingeführt. Die Abstände zwischen den Frequenzkanälen SCH zur Zeitsynchronisation bestimmt die Kapazität, die das Mobilfunknetz dafür zur Verfügung stellt.

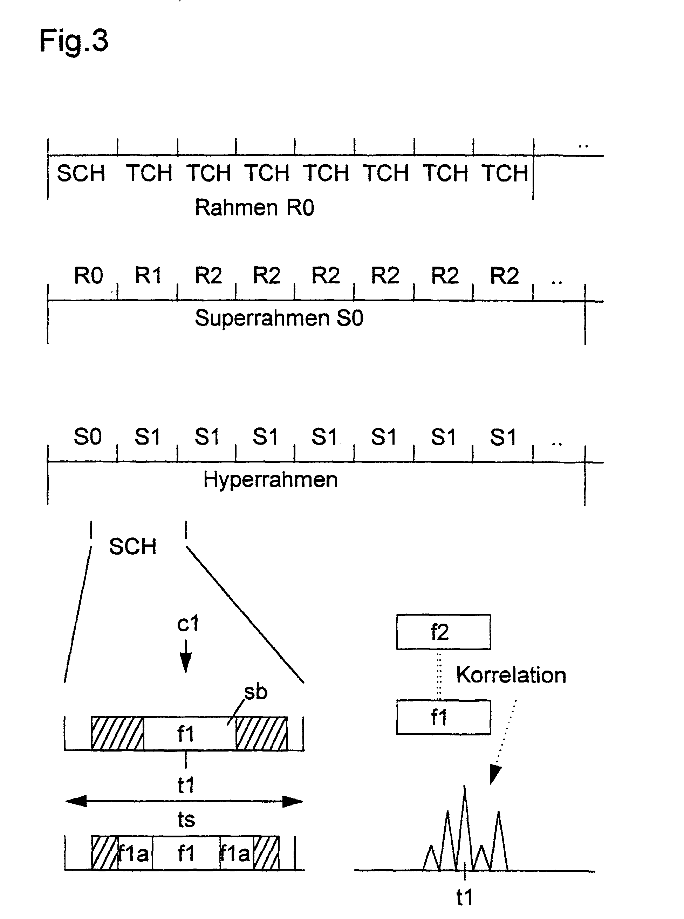

Anhand von FIG 3 wird die Struktur eines Frequenzkanals SCH zur Zeitsynchronisation gezeigt. Der breitbandige Frequenzbereich B im Frequenzband eines Organisationskanals der entsprechenden Zelle des Mobilfunknetzes ist Teil eines Rahmens R0, der einen Frequenzkanal SCH zur Zeitsynchronisation (in dem jedoch auch weitere Signalisierungs- und Nutzdatenverbindungen abgewickelt werden können) und in den folgenden Zeitschlitzen ausschließlich Frequenzkanäle TCH zur Nutz- bzw. Signalisierungsdatenübertragung enthält.

Dieser Rahmen R0 ist wiederum Teil eines Superrahmens S0, der außer dem Rahmen R0 einen Rahmen R1 mit Frequenzkanälen FK mit weiteren zellenbezogenen Informationen und Rahmen R2 mit Nutzdaten umfaßt. Ein Hyperrahmen enthält wiederum mehrere Superrahmen S0, S1, von denen zumindest einer einen Frequenzkanal SCH zur Zeitsynchronisation beinhaltet.

In einem Zeitschlitz ts des Frequenzkanals SCH zur Zeitsynchronisation wird ein Synchronisationsblock sb in Abwärtsrichtung übertragen, der als Trainingssequenz eine Signalform f1 enthält, die in den Mobilstationen MS bekannt ist. Die Signalform f1 wird in weitere zu übertragende Informationen Nutz- oder Signalisierungsinformationen eingebettet. Der Synchronisationsblock sb ist mit einem individuellen Kode c1 gespreizt. Die weiteren Verbindungen mit den Nutz- oder Signalisierungsinformationen werden von anderen Basisstationen BS im gleichen Frequenzbereich B gesendet, die mit der Basis-station BS, die die Signalform f1 sendet, rahmensynchronisiert. Alternativ oder zusätzlich kann auch die die Signalform f1 sendende Basisstation BS den Zeitschlitz ts für weitere Verbindungen nutzen. Diese Überlagerung mehrerer Signale, die durch die die verbindungsindividuelle Feinstruktur bildenden Teilnehmerkode c unterscheidbar sind, kann wie im folgenden erläutert trotzdem aufgelöst werden.

Eine alternative Ausführungsform für den Synchronisationsblock sb sieht zusätzlich zur als Symbolfolge ausgebildeten Signalform Symbole fla vor, die der Rahmensynchronisation dienen. Anhand dieser zusätzlichen Symbole fla, die im ersten Rahmen R0 eines Superrahmens S0 gesendet werden, kann von einer empfangenden Mobilstation MS eine Identifizierung der aktuellen Position des Zeitschlitzes ts in der Rahmenstruktur durchgeführt werden. Der Synchronisationsblock sb wird von der Basisstation BS mit einer Sendeleistung abgestrahlt, die im Sinne einer Leistungsregelung an die Empfangsleistungen der übrigen bestehenden Verbindungen angepaßt ist.

Empfangsseitig wird zur Zeitsynchronisation ein Zeitpunkt t1 durch Auswertung der Signalform f1 bestimmt. Der Zeitpunkt t1 gibt in etwa die Mitte der Signalform an. Da das Aussenden des Synchronisationsblocks sb ebenfalls z.B. in der Mitte des entsprechenden Zeitschlitzes ts stattfindet, kann bei korrekter Auswertung empfangsseitig die Mitte eines Zeitschlitzes ts festgestellt werden. Dazu versucht die Mobilstation MS im entsprechenden Frequenzkanal SCH ständig durch eine Korrelation des Empfangssignals mit einer Vergleichsfolge f2, die der Signalform f1 entspricht, den Zeitpunkt t1 des Eintreffenes der Signalform f1 zu ermitteln. Eine Korrelationspitze zeigt dabei den Zeitpunkt t1 an, der im folgenden als Mitte des Zeitschlitzes ts angenommen wird.

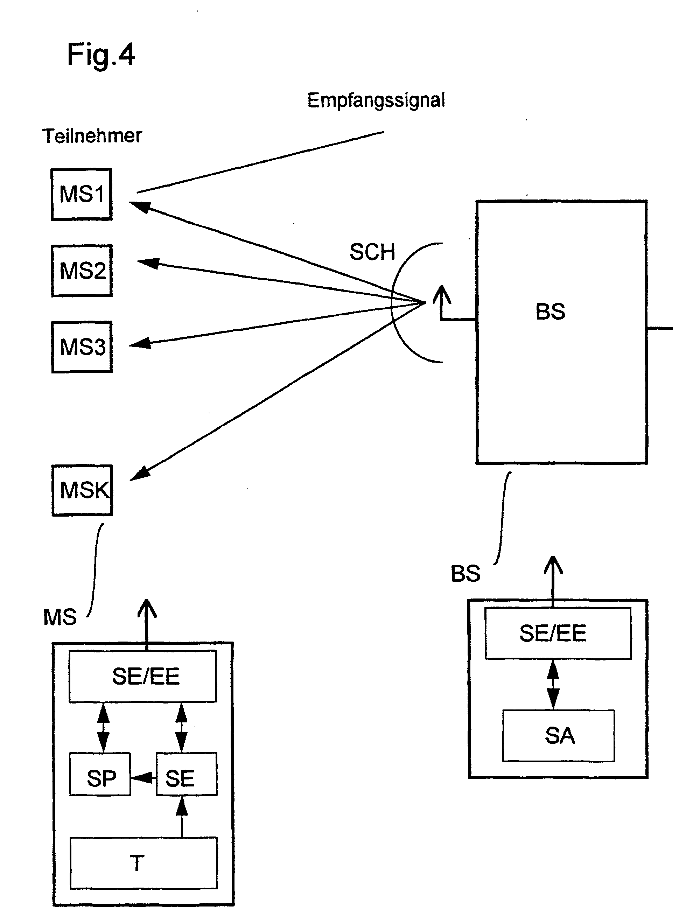

FIG 4 zeigt die Funkübertragung in Abwärtsrichtung von der Basisstation BS zu Mobilstationen MS1 bis MSK. Die Mobilstationen MS bestimmen zuerst einen oder mehrere Frequenzbereiche B mit einer ausreichend hohen oder maximalen Empfangsleistung. Dies sind die Frequenzbereiche B der nächstliegenden Basisstation BS, in deren Zelle sich die Mobilstation MS momentan befindet.

Mobilstationen MS1 bis MSK werten in diesen Frequenzbereichen B Empfangssignale aus und führen eine ständige Korrelation der Werte des Empfangssignals mit der Vergleichsfolge f2 durch. Bei ausreichend großer Korrelationsspitze wird der bestimmte Zeitpunkt t1 des Eintreffens der Signalform f1 als Bezugspunkt für die Zeitsynchronisation gewählt und eine interne Zeitreferenz der Mobilstation MS abgeglichen. Gleichzeitig kann der entsprechende Frequenzkanal SCH für eine anschießende Frequenzsynchronisation benutzt werden.

Die Basisstation BS enthält eine Sende/Empfangseinrichtung SE/EE, die abzustrahlende Sendesignale digital/analog wandelt, vom Basisband in den Frequenzbereich B der Abstahlung umsetzt und die Sendesignale moduliert und verstärkt. Eine Signalerzeugungseinrichtung SA hat zuvor die Sendesignale, beispielsweise Synchronisationsblöcke sb, zusammengestellt und den entsprechenden Frequenzkanälen SCH, TCH zugeordnet.

Die Mobilstation MS enthält ein Bedienfeld T, eine Signalverarbeitungseinrichtung SP, eine Steuereinrichtung SE und eine Sende/Empfangseinrichtung SE/EE. Am Bedienfeld T kann der Teilnehmer Eingaben vornehmen, u.a. eine Eingabe zum Aktivieren der Mobilstation MS, die daraufhin als erstes eine Synchronisation auf das sie umgebende Mobilfunknetz durchführen muß.

Die Steuereinrichtung SE nimmt diese Anforderung auf und veranlaßt die Signalverarbeitungseinrichtung SP über die Sende/Empfangseinrichtung SE/EE empfangene Empfangssignale daraufhin auszuwerten, daß, wie bereits zuvor beschrieben, der entsprechende Frequenzbereich B ausgewählt wird und eine Korrelation bis zum erfolgreichen Auffinden der Signalform f1 durchgeführt wird.

Zur Signalverarbeitung werden die Empfangssignale in Symbole mit diskretem Wertevorrat umgewandelt, beispielsweise digitalisiert. Die Signalverarbeitungseinrichtung SP, die als digitaler Signalprozessor einen JD-Prozessor zum Detektieren der Nutzinformationen und der Signalisierungsinformationen nach dem JD-CDMA-Verfahren (joint detection) enthält, wertet auch die Synchronisationsblöcke sb aus.

Die Auswertung erfolgt durch Feststellen der Korrelation zwischen den empfangenen Signalen und der in der Mobilstation MS bekannten Vergleichsfolge f2. Dabei wird auch der Zeitpunkt t1 der größten Korrelation bestimmt, der im weiteren der zeitlichen Synchronisation dient. Alternativ kann auch eine signalangepaßt Filterung oder ein anderer linearer Algorithmus (z.B. gemäß dem zero forcing oder dem minimum square error Kriterium) angewendet werden. Zu Erhöhung der Genauigkeit des Zeitsynchronisation wiederholt die Mobilstation MS die Bestimmung des Zeitpunkts t1 des Eintreffens des Synchronisationsblocks sb und mittelt deren Werte.

Weiterhin kann statt eines einzelnen Korrelators oder eines signalangepaßten Filters auch eine Auswertung in einer Filterbank für verschiedene Frequenzoffsets und Dopplerverschiebungen erfolgen.

## Patentansprüche

1. Verfahren zur Zeitsynchronisation für eine Mobilstation (MS) eines Funk-Kommunikationssystems,
wobei das Funk-Kommunikationssystem durch Zeitschlitze (ts) und durch breitbandige Frequenzbereiche (B) gebildete Frequenzkanäle (FK) bereitstellt, in denen gleichzeitig Informationen einer oder mehrerer Verbindungen zwischen Mobilstationen (MS) und einer Basisstation (BS) übertragen werden, und
wobei die Informationen unterschiedlicher Verbindungen mittels Spreizkodes unterscheidbar sind,
bei dem
- fur die Mobilstationen (MS) in Abwartsrichtung wiederkehrend ein Frequenzkanal (SCH) zur Zeltsynchronisation bereitgestellt wird,
- innerhalb des Frequenzkanals (SCH) zusatzlich zu Informationen weiterer Verbindungen mehrere unterschiedliche bekannte Signalformen (f1, f1a) ubertragen werden,
- von der zu synchronisierenden Mobilstation (MS) aus empfangenen Signalen Zeitpunkte (t1) des Eintreffens der Signalformen (f1, f1a) ermittelt werden, und
- von der Mobilstation (MS) die Zeitpunkte (t1) und die Art der Signalformen (f1, f1a) zur Zeitsynchronisation bezüglich Zeitschlitz (ts) und Rahmen benutzt werden.

2. Verfahren nach Anspruch 1, bei dem
die Signalform (f1) als eine Trainingssequenzen eines Funkblocks mit zu übertragenden Daten ausgebildet ist.

3. Verfahren nach einem der vorherigen Ansprüche, bei dem die Signalform (f1) mit einem individuellen Spreizkode (cl) gespreizt ist.

4. Verfahren nach einem der vorherigen Ansprüche, bei dem der zumindest eine Zeitpunkt (t1) durch Bestimmung der Korrelation eines Empfangssignals mit einer im Empfänger bekannten Vergleichsfolge (f2) ermittelt wird.

5. Verfahren nach einem der Ansprüche 1 bis 3, bei dem
der zumindest eine Zeitpunkt (t1) durch signalangepaßte Filterung eines Empfangssignals ermittelt wird.

6. Verfahren nach einem der vorherigen Ansprüche, bei dem mehrere Zeitpunkte (t1, t2) des Eintreffens bestimmt werden und zur Frequenzsynchronisation eine Mittelung der Zeitpunkte (t1, t2) durchgeführt wird.

7. Verfahren nach einem der vorherigen Ansprüche, bei dem die Signalform (f1) in bestimmten Zeltschlitzen (ts) Angaben über eine Rahmenstruktur der Frequenzkanale (FK) enthalt.

8. Verfahren nach Anspruch 7, bei dem
sich die Signalform (f1a) zu bestimmten Zeitpunkten von Hyper- und/oder Superrahmen von der Signalform (f1) in den übrigen Zeitschlitzen (ts) des Frequenzkanals (SCH) zur Zeitsynchronisation unterscheidet.

9. Verfahren nach Anspruch 7, bei dem
zusätzliche Symbole die Signalform (f1) zu Beginn von Hyperund/oder Superrahmen ergänzen.

10. Mobilstation (MS) zur Durchführung des Verfahrens nach Anspruch 1,
mit einer Signalverarbeitungseinrichtung (SP)
- zum Ermitteln von Zeitpunkten (t1) des Eintreffens der Signalformen (f1, f1a),
mit einer Steuereinrichtung (SE)
- zur Zeitsynchronisation unter Berücksichtigung der ermittelten Zeitpunkte (t1).

11. Basisstation (BS) zur Durchführung des Verfahrens nach Anspruch 1,
mit einer Signalerzeugungseinrichtung (SA) zum Erzeugen von vorbestimmten Signalformen (f1, f1a), und
mit einer Sendeeinrichtung (EE) zum Senden der Signalformen (f1, f1a) im Frequenzkanal (SCH) zur Zeitsynchronisation.

## Claims

1. Time synchronization method for a mobile station (MS) of a radio communications system, the radio communications system providing frequency channels (FK) which are formed by time slots (ts) and by broadband frequency ranges (B) and in which information from one or more connections is transmitted simultaneously between mobile stations (MS) and base stations (BS), and it being possible to distinguish the information from different connections by means of spread codes, in which
- a frequency channel (SCH) is repeatedly provided for time synchronization for the mobile stations (MS) in the downward direction,
- in addition to information from further connections, a plurality of different known signal forms (f1, f1a) are transmitted within the frequency channel (SCH),
- instants (t1) of the arrival of signal forms (f1, f1a) are determined by the mobile station (MS) to be synchronized from received signals, and
- the instants (tl) and the type of signal forms (f1, f1a) are used by the mobile station (MS) for time synchronization with reference to time slot (ts) and frame.

2. Method according to Claim 1, in which the signal form (f1) is designed as a training sequences of a message block with data to be transmitted.

3. Method according to one of the preceding claims, in which the signal form (f1) is spread with the aid of an individual spread code (c1).

4. Method according to one of the preceding claims, in which the at least one instant (t1) is determined by determining the correlation between a received signal and a reference sequence (f2) known in the receiver.

5. Method according to one of Claims 1 to 3, in which the at least one instant (t1) is determined by signal-matched filtering of a received signal.

6. Method according to one of the preceding claims, in which a plurality of instants (t1, t2) of the arrival are determined, and averaging of the instants (t1, t2) is carried out for the purpose of frequency synchronization.

7. Method according to one of the preceding claims, in which the signal form (f1) includes data on a frame structure of the frequency channels (FK) in specific time slots (ts).

8. Method according to Claim 7, in which the signal form (f1a) at specific instants of hyperframes and/or superframes differs from the signal form (f1) in the remaining time slots (ts) of the frequency channel (SCH) for time synchronization.

9. Method according to Claim 7, in which additional symbols supplement the signal form (f1) at the start of hyperframes and/or superframes.

10. Mobile station (MS) for carrying out the method according to Claim 1, having a signal processing device (SP)
for determining instants (t1) of the arrival of the signal forms (f1, f1a), and
having a control device (SE)
- for time synchronization taking account of the instants (t1) determined.

11. Base station (BS) for carrying out the method according to Claim 1,
having a signal generating device (SA) for generating predetermined signal forms (f1, f1a), and
having a transmitting device (EE) for transmitting signal forms (f1, f1a) in the frequency channel (SCH) for time synchronization.

## Revendications

1. Procédé pour la synchronisation temporelle pour une station mobile (MS) d'un système de radiocommunication mobile,
dans lequel le système de radiocommunication mobile met à disposition des canaux de fréquences (FK), formés par des créneaux temporels (ts) et par des plages de fréquences (B) à large bande, dans lesquels des informations d'une ou plusieurs liaisons entre des stations mobiles (MS) et une station de base (BS) sont transmises simultanément, et
dans lequel les informations de différentes liaisons peuvent être distinguées au moyen de codes d'étalement,
dans lequel
- pour les stations mobiles (MS), on met à disposition dans le sens de la liaison descendante de façon récurrente un canal de fréquences (SCH) pour la synchronisation temporelle,
- à l'intérieur du canal de fréquences (SCH), on transmet en plus des informations d'autres liaisons plusieurs formes de signal connues différentes (f1, f1a),
- la station mobile (MS) à synchroniser détermine à partir des signaux reçus des instants (t1) de l'arrivée des formes de signal (f1, f1a), et
- la station mobile (MS) exploite les instants (t1) et le type des formes de signal (f1, f1a) pour la synchronisation temporelle par rapport au créneau temporel (ts) et à la trame.

2. Procédé selon la revendication 1, dans lequel la forme de signal (f1) est conçue comme une séquence de conditionnement d'un bloc radio avec des données à transmettre.

3. Procédé selon l'une des revendications précédentes, dans lequel la forme de signal (f1) est étalée avec un code d'étalement (c1) individuel.

4. Procédé selon l'une des revendications précédentes, dans lequel on détermine l'instant (t1), il y en a au moins un, au moyen d'une détermination de la corrélation d'un signal reçu avec une séquence de comparaison (f2) connue en soi dans le récepteur.

5. Procédé selon l'une des revendications 1 à 3, dans lequel on détermine l'instant (t1), il y en a au moins un, au moyen d'un filtrage, adapté au signal, d'un signal reçu.

6. Procédé selon l'une des revendications précédentes, dans lequel on détermine plusieurs instants (t1, t2) de l'arrivée et on effectue pour la synchronisation fréquentielle un calcul de moyenne des instants (t1, t2).

7. Procédé selon l'une des revendications précédentes, dans lequel la forme de signal (f1) contient dans certains créneaux temporels (ts) des indications sur une structure de trame des canaux de fréquences (FK).

8. Procédé selon la revendication 7, dans lequel la forme de signal (f1a) à certains instants d'hypertrames et/ou de supertrames se distingue de la forme de signal (f1) dans les autres créneaux temporels (ts) du canal de fréquences (SCH) pour la synchronisation temporelle.

9. Procédé selon la revendication 7, dans lequel des symboles supplémentaires complètent la forme de signal (f1) au début d'hypertrames et/ou de supertrames.

10. Station mobile (MS) pour la mise en oeuvre du procédé selon la revendication 1,
comprenant un dispositif de traitement de signal (SP),
- pour déterminer des instants (t1) de l'arrivée des formes de signal (f1, f1a),
comprenant un dispositif de commande (SE)
- pour la synchronisation temporelle en tenant compte des instants (t1) déterminés.

11. Station de base (BS) pour la mise en oeuvre du procédé selon la revendication 1,
comprenant un dispositif de production de signal (SA) pour produire des formes de signal (f1, f1a) prédéterminées, et
comprenant un dispositif d'émission (EE) pour émettre des formes de signal (f1, f1a) dans le canal de fréquences (SCH) pour la synchronisation temporelle.
